# EUROPÄISCHE PATENTSCHRIFT

(11) **EP 1 182 097 B1**
(45) Veröffentlichungstag und Bekanntmachung des Hinweises auf die Patenterteilung: **26.10.2005**
(21) Anmeldenummer: 01111892.4
(22) Anmeldetag: 17.05.2001
(51) Int. Cl.: B60R 21/13

(54) **Überrollschutzsystem**
Rollbar system
Système d'arceau de sécurité

(30) Priorität: 19.08.2000 DE 10040649
(43) Veröffentlichungstag der Anmeldung: 27.02.2002
(73) Patentinhaber: ISE Innomotive Systems Europe GmbH, 51702 Bergneustadt (DE)
(72) Erfinder: Nass, Michael, 51702 Bergneustadt (DE)
(74) Vertreter: Fuchs Mehler Weiss & Fritzsche

(56) Entgegenhaltungen:
- EP-A- 0 608 794
- WO-A-97/48579
- DE-A- 4 342 400

## Beschreibung

Die Erfindung bezieht sich auf ein Überrollschutzsystem, mit
- einem fahrzeugfest anbringbaren kassettenartigen Gehäuse, das die Kassetttentiefe vorgebende Seitenwände besitzt,
- einem U-förmigen Überrollbügel, bestehend aus einem gekrümmten Abschnitt und zwei parallelen Schenkelrohren, die jeweils eine geschlossene Mantelfläche besitzen, und deren offene Enden über eine biegesteife Traverse miteinander verbunden sind, und
- einem am oberen Ende des Gehäuses an den Seitenwänden angebrachten Führungsblock, der Führungsöffnungen zur äußere Führung der Schenkelrohre besitzt.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied gebildet ist. Die Verriegelungseinrichtung besteht typischerweise aus einer schwenkbar angelenkten Rastklinke mit Zahnsegmenten und einer feststehenden Zahnleiste oder dergleichen, wobei ein Element mit dem Überrollbügel und das andere fahrzeugfest verbunden ist.

Eine derartige Kassetten-Konstruktion eines Überrollbügelschutzsystems zeigt beispielsweise die DE 43 42 400 A 1, von der die Erfindung ausgeht. Auch die DE 197 81 833 T 1 zeigt diese Kassetten-Konstruktion.

Das bekannte Überrollschutzsystem weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, in Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Bei der vorbeschriebenen Kassettenkonstruktion kommt es neben einer guten Führung der Schenkelrohre des Überrollbügels insbesondere darauf an, daß die bei einem Überschlag typischerweise auf den Überrollbügel wirkenden und an der führenden Halterung der Schenkelrohre auftretenden Lasten, insbesondere die Scher- und Knickbelastung in Fahrzeugrichtung, also in einer Richtung, die senkrecht auf der durch die Schenkelrohre des Überrollbügels aufgespannten Ebene steht, mit Sicherheit von der Halterung, d.h. den Standrohren und dem Führungsblock, aufgenommen werden.

Der Erfindung liegt daher die Aufgabe zugrunde, die Scher- und Knickbelastbarkeit des in der Kassette geführten Überrollbügels mit relativ einfachen Mitteln zu erhöhen.

Ausgehend von dem eingangs bezeichneten Überrollbügelsystem, mit
- einem fahrzeugfest anbringbaren kassettenartigen Gehäuse, das die Kassetttentiefe vorgebende Seitenwände besitzt,
- einem U-förmigen Überrollbügel, bestehend aus einem gekrümmten Abschnitt und zwei parallelen Schenkelrohren, die jeweils eine geschlossene Mantelfläche besitzen, und deren offene Enden über eine biegesteife Traverse miteinander verbunden sind, und
- einem am oberen Ende des Gehäuses an den Seitenwänden angebrachten Führungsblock, der Führungsöffnungen zur äußere Führung der Schenkelrohre besitzt,
gelingt die Lösung dieser Aufgabe erfindungsgemäß dadurch, daß
- die Seitenwände ein U-Profil bilden,
- an den Stirnseiten des Führungsblockes jeweils zwei um das Öffnungsmaß des Seitenwand-U-Profiles beabstandete, eine Profilbrücke bildende schenkelartige Fortsätze angeformt sind, die fest mit den zugehörigen Schenkeln des Seitenwand-U-Profils verbunden sind,
- die Traverse blockartig als Profilteil ausgebildet ist, Bohrungen zur befestigenden Aufnahme der Enden der Schenkelrohre des Überrollbügels aufweist und an ihren Stirnseiten jeweils zwei um das Öffnungsmaß des Seitenwand-U-Profils beabstandete, eine Profilbrücke bildende, angeformte Fortsätze besitzt, die in dem Seitenwand-U-Profil, geführt von dessen Schenkeln, verschiebbar aufgenommen sind.

Durch die erfindungsgemäße Ausbildung des Überrollschutzsystems wird die Führung des Überrollbügels signifikant verbessert und die Knicksteifigkeit des Systems signifikant erhöht.

Die Knicksteifigkeit kann gemäß einer Weiterbildung der Erfindung noch gesteigert werden, wenn die Schenkelrohre in zwei gegenüberliegenden Abschnitten senkrecht zur Bügelrohr-Ebene eine vergrößerte Wandstärke besitzen.

Die erfindungsgemäße Strukturierung des Überrollschutzsystems, insbesondere der Traverse, erlaubt eine relativ einfache Haltevorrichtung zum Halten des Überrollbügels in seiner unteren Ruhelage gemäß einer Ausgestaltung der Erfindung, die so ausgebildet ist, daß im Bodenteil des Kassettengehäuses einmal eine Halteklinke schwenkbar angelenkt ist, und zum anderen ein sensorgesteuertes Auslösesystem für ein Verschwenken der Halteklinke fest angebracht ist, und daß an der Traverse eine Verriegelungsnase angeformt ist, die in Wirkeingriff mit der Halteklinke bringbar ist, um den Überrollbügel in seiner unteren Ruhelage zu halten.

Die zusätzliche Führung der Traverse und damit des Überrollbügels mit seinen beiden Schenkelrohren erlaubt mit Vorteil das Weglassen von die Schenkelrohre führenden Halterohren, indem gemäß einer weiteren Ausgestaltung der Erfindung im Bodenteil des Kassettengehäuses zwei Federführungsbolzen entsprechend der Bügelrohrbreite beabstandet verankert sind, die jeweils eine Antriebs-Druckfeder für das Ausfahren des Überrollbügels in seine obere, schützende Stellung aufnehmen und direkt von den Schenkelrohren des Überrollbügels umfaßt sind.

Diese ergänzende Führung der Schenkelrohre durch die Federführungsbolzen bzw. die darauf aufgenommenen Druckfedern, läßt sich mit Vorteil verbessern, wenn an den Federführungsbolzen jeweils mindestens ein Satz gespreizter Zentrierarme angebracht ist, die einen gleichmäßigen Abstand des jeweiligen Schenkelrohres zu der zugehörigen Antriebs-Druckfeder sichern.

Die Führung der Traversen-Profilbrücke läßt sich gemäß einer Weiterbildung der Erfindung verbessern, wenn in dem durch die Hubhöhe der Traverse vorgegebenen Bereich jeweils ein Profilteil angebracht ist, das zwei um das Innenmaß der die Profilbrücke bildenden schenkelartigen Fortsätze beabstandet angeordnete Anschläge aufweist.

Dabei kann das Profilteil aus Metall oder einem anderen Werkstoff bestehen.

Ein besonders gutes Gleitvermögen der Profilbrücke der Traverse läßt sich erzielen, wenn das Profilteil aus Kunststoff besteht, und neben den Anschlägen an den Stirnseiten jeweils einen, den Raum zwischen dem schenkelartigen Fortsatz der Traverse und dem U-Schenkel des Seitenwandprofils ausfüllenden Fortsatz besitzt.

Anhand von in den Zeichnungen dargestellten Ausführungsbeispielen wird die Erfindung näher beschrieben.

Es zeigen:
- Figur 1: in einer isometrischen Darstellung den Gesamtaufbau des erfindungsgemäßen Überrollbügelschutzsystems, mit einem Kassettengehäuse, das U-förmige Seitenprofile aufweist, an denen ein Führungsblock für die Schenkelrohre des Überrollbügels fest angebracht und in denen eine, die Schenkel des Überrollbügels verbindende Traverse geführt ist.
- Figur 2: in einer Schnittansicht durch den Führungsblock den Profilkörperaufbau dieses Führungsblockes mit an den Stirnseiten in einer Profilbrücke angeformten, schenkelartigen Befestigungs-Fortsätzen zur Befestigung an den Schenkeln der U-förmigen Seitenprofile des Gehäuses,
- Figur 3: in einer schematischen, isometrischen Darstellung die durch einen Profilkörper gebildete Traverse im Zusammenwirken mit dem Bodenteil des Kassettengehäuses unter Darstellung einer Haltevorrichtung für den Überrollbügel in seiner Ruhelage bei gelöster Haltevorrichtung,
- Figur 4: eine Darstellung nach Figur 3, bei der jedoch die beiden Teile der Haltevorrichtung, den Überrollbügel in der Ruhelage haltend, im Wirkeingriff stehen,
- Figur 5: in einer Schnittansicht durch die Traverse insbesondere die Befestigungsbohrungen für die Enden der Schenkelrohre des Überrollbügels und die an den Stirnseiten in einer Profilbrücke angeformten, schenkelartigen Führungs-Fortsätze der Traverse im Führungseingriff mit den U-förmigen Seitenprofilen des Gehäuses,
- Figur 6: in einer Ausschnittdarstellung der Figur 5 die Anbringung eines Metallprofilteiles in den Gehäuse-Seitenprofilen, und
- Figur 7: ebenfalls in einer Ausschnittdarstellung der Figur 5 die Anbringung eines Kunststoffprofilteiles in den beiden Gehäuse-Profilteilen.

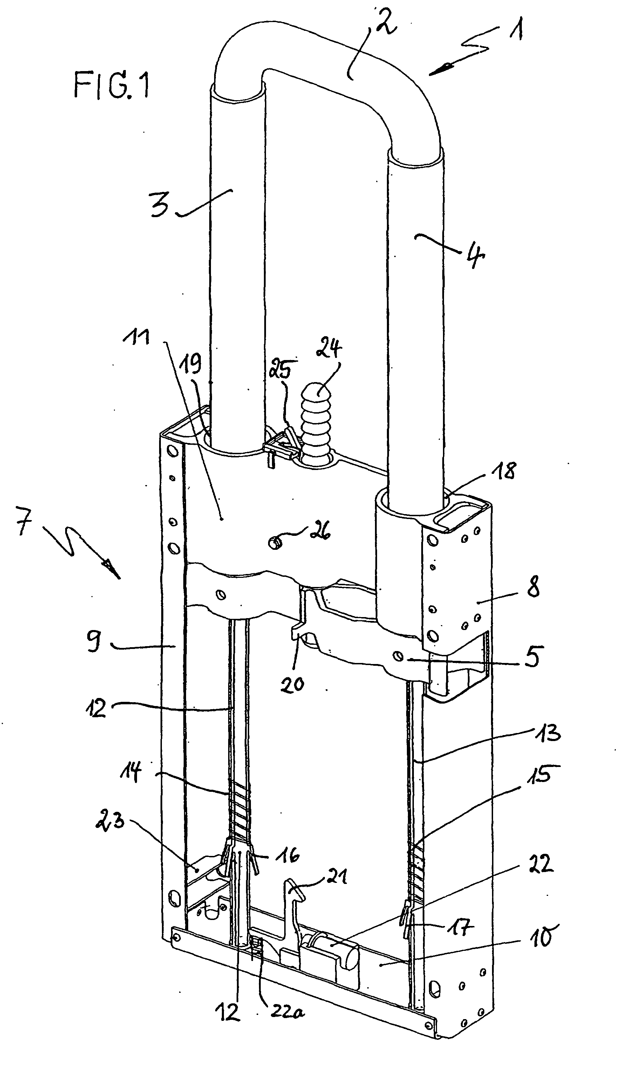

Die Figur 1 zeigt in einer isometrischen Darstellung den prinzipiellen Aufbau des erfindungsgemäßen Überrollschutzsystems, wobei Teile weggebrochen sind. In Figur 1 ist dabei der ausgefahrene Zustand dargestellt.

Dieses System weist zunächst einen U-förmigen Überrollbügel 1 auf, welcher aus drei Rohren 2, 3, 4 zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelrohre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

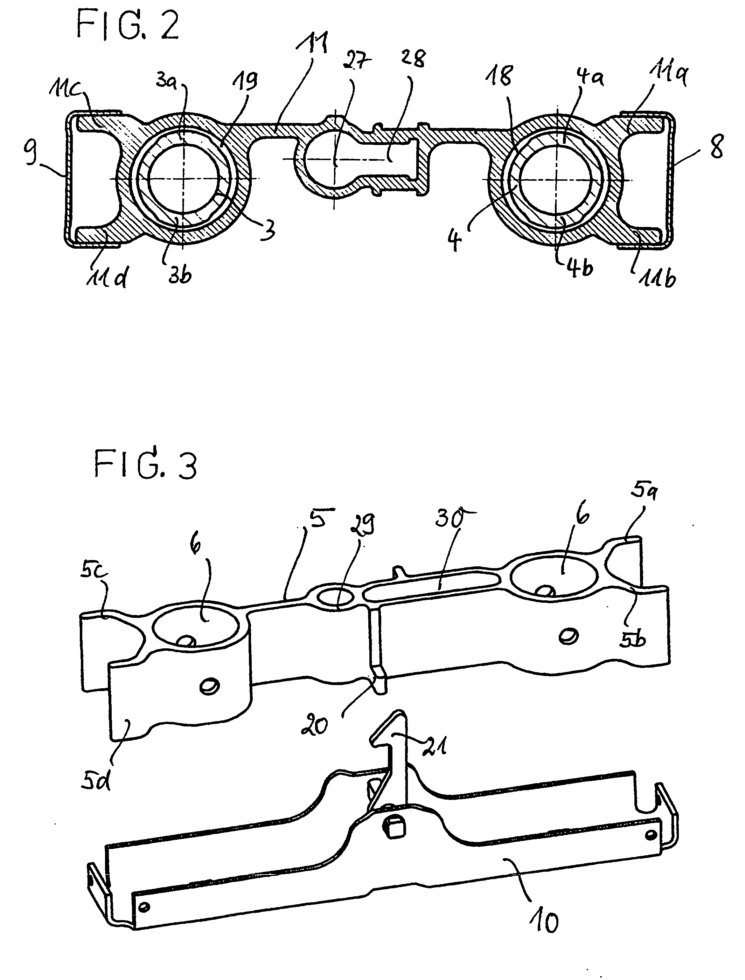

Die offenen Enden der Schenkelrohre 3, 4 sind mittels einer Traverse 5, die später anhand der Figur 3 noch näher erläutert wird, miteinander starr verbunden. Zu diesem Zweck ist die Traverse 5 als Profilkörper mit vorgegebener Höhe ausgebildet, der Bohrungen 6 zur Aufnahme der Schenkelrohre 3, 4 aufweist, in denen sie befestigt sind.

Der Überrollbügel 1 ist mit seinen beiden Schenkelrohren 3, 4, die eine geschlossene Mantelfläche aufweisen, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen, später anhand der Figur 2 noch näher erläuterten, Führungsblock 11 miteinander verbunden, z.B. durch Nieten, Schrauben, Verschweißen oder dergleichen.

Im Bodenblech 10 sind zwei Federführungsbolzen 12, 13 verankert, auf denen vorspannbare Druckfedern 14, 15 zum Ausfahren des Überrollbügels 1 im Gefahrenfall, bzw. bei Handauslösung aufgeschoben sind und die die Schenkelrohre führen.

An den Federführungsbolzen 12, 13 ist jeweils mindestens ein Satz gespreizter Zentrierarme 16, 17 angebracht, vorzugsweise einstückig angeformt, die einen gleichmäßigen Abstand zwischen der zugehörigen Druckfeder 14, 15 und dem zugeordneten Schenkelrohr 3, 4 sichern, was sich mit Vorteil auch geräuschmindernd auswirkt.

Es ist auch denkbar, die Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt, wie auch die Fig. 2 zeigt, zwei Führungsbohrungen 18, 19, die die Mantelfläche der Schenkelrohre 3, 4 seitlich abstützen und eine sehr weit tolerierte Führung für die sich längs der Führungsbohrungen 18, 19 bewegenden Schenkelrohre 3, 4 bieten. Am oberen, dem gekrümmten Rohr 2 zugewandten Ende der Führungsbohrungen 18, 19 ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen 18, 19 ausgeglichen wird. Zusätzlich ist für die Schenkelrohre noch eine innere Führung vorgesehen, die durch die erwähnten gehäusefesten Federführungsbolzen bzw. Standrohre gewährleistet ist.

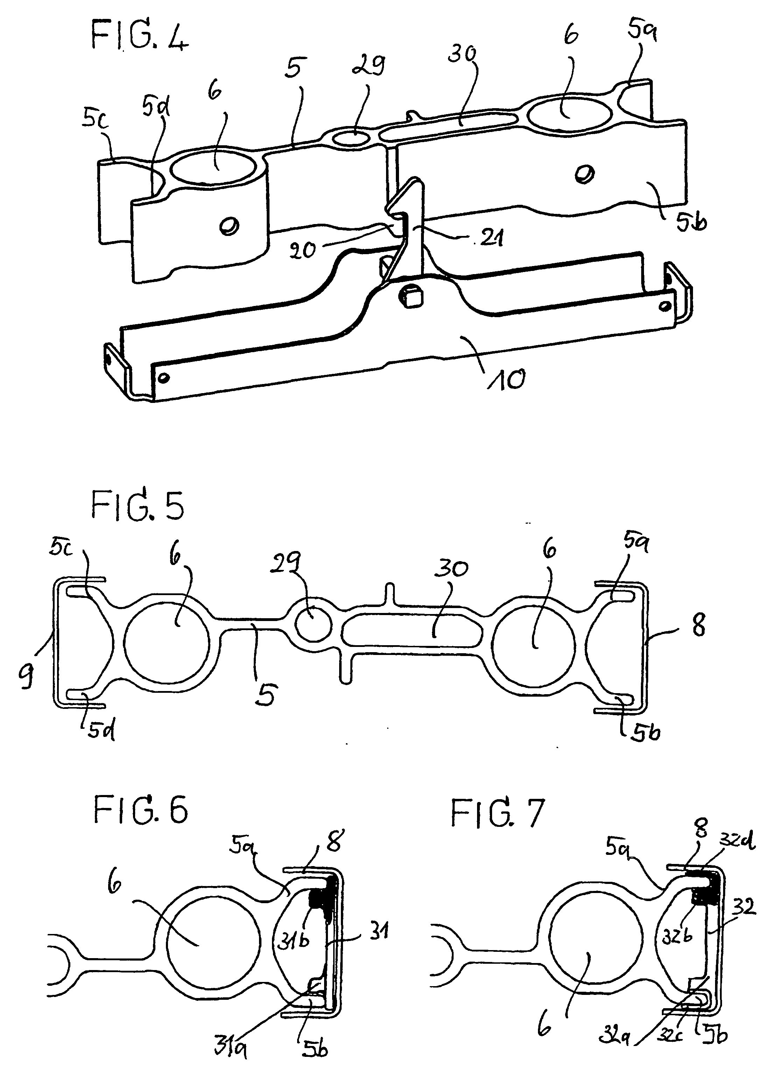

Um den Überrollbügel 1 in seiner (nicht dargestellten) unteren Position, der Ruhelage, gegen die Kraft der dann vorgespannten Druckfedern 14, 15 halten zu können, ist an der Traverse 5 eine Haltenase 20 angebracht, vorzugsweise einstückig angeformt, die in Wirkeingriff mit einer im Bodenteil schwenkbar angelenkten, mittels einer Feder 22 a im Uhrzeigersinn vorgespannten Halteklinke 21 bringbar ist. Bei abgesenktem Überrollbügel 1, und damit auch bei abgesenkter Traverse 5, umfaßt die Halteklinke 21 die Haltenase 20 und hält den Überrollbügel in dieser Ruhelage (Fig. 4). Ein Distanzstück 23, das jeweils in den Seitenprofilen 8, 9 befestigt ist, begrenzt dabei die Verschiebbarkeit der Traverse 5 nach unten und gibt somit die Ruhelage vor. Ferner wird durch das Distanzstück 23 beim Verschrauben der Kassette im Fahrzeug eine Deformation der Seitenprofile vermieden.

Am Bodenteil 10 ist weiterhin ein sensorgesteuertes Auslösesystem 22 fest angebracht, das vorzugsweise durch ein pyrotechnisches Auslöseelement gebildet, das sicherer als ein üblicher Auslösemagnet die relativ hohe Auflagekraft der Halteklinke 21 auf der Haltenase 20 überwinden kann.

Auf der Traverse 5 ist in an sich bekannter Weise ein Rastdorn 24 befestigt, der in der oberen Stellung mit einer Verriegelungsklinke 25, die im Führungsblock 11 um die Welle 26 schwenkbar angelenkt ist, verriegelnd in Wirkeingriff bringbar ist, um ein ungewolltes Eindrücken des Überrollbügels in einer ausgefahrenen Position zu verhindern. Diese Verriegelung wird in der eingangs zitierten DE 43 42 400 A1 näher beschrieben.

Es ist verständlich, daß die beschriebene Haltevorrichtung und Verriegelungseinrichtung nur, wenn auch sehr vorteilhafte, Ausführungsformen darstellen und daher auch andere Konstruktionen anwendbar sind.

Die Fig. 2 zeigt in einer Querschnitts-Darstellung durch den Führungsblock 11 den näheren Aufbau des Führungsblockes, und macht insbesondere auch den Profilteilcharakter des Führungsblockes deutlich. In den Führungsbohrungen 18, 19 sind die Schenkelrohre 4, 3 geführt, deren Wandstärke in zwei gegenüberliegenden Abschnitten 3 a, 3 b bzw. 4 a, 4 b vergrößert ist, um die Knickbelastbarkeit, d.h. die Knicksteifigkeit in den beiden Richtungen der Biegebeanspruchung senkrecht zur Überrollbügel-Ebene zu vergrößern. Dies ist eine andere Lösung als im Fall der DE 197 41 262 A1, bei der im Rohrinneren gegenüberliegende radiale Vorsprünge angeformt sind, die die Verformbarkeit des Rohrs begrenzen.

Der den Führungsblock 11 bildende Profilkörper weist ferner eine Durchgangsöffnung 27 für den Durchgang des Rastdornes 24 durch den Führungskörper beim Ein- und Ausfahren des Überrollbügels 1 sowie direkt daran anschließend eine Bohrung 28 auf, in der die Verriegelungsklinke 25 drehbar angelenkt ist (nicht dargestellt). Dabei ist die schlüssellochähnliche Kontur dieser Bohrungen 27, 28 so gewählt, daß zwar die Verriegelungsklinke 25 die notwendige Schwenkbewegung durchführen kann, eine Schwenkbewegung des Rastdornes aber mit Sicherheit durch Anlage an der Innenfläche der Öffnung 27 verhindert wird. Dadurch wird letztlich verhindert, daß im Crashfall der in Verbindung mit dem Überrollbügel 1 bewegliche Rastdorn 24 gegenüber der Verriegelungsklinke 25 ausweichen kann, wodurch so die Haltewirkung des Überrollbügels im Crashfall verstärkt ist.

An den beiden Stirnseiten des Führungsblockes 11 sind jeweils zwei um das Öffnungsmaß der Seitenprofile 8, 9 beabstandete schenkelartige Fortsätze 11 a, 11 b, 11 c und 11 d angeformt, die jeweils flächig an der Innenseite des zugehörigen U-Schenkels der Seitenprofile 8, 9 anliegen und fest mit diesen verbunden sind, beispielsweise durch Schrauben, Nieten bzw. Schweißen. Diese neuartige Struktur mit den U-förmigen Seitenprofilen 8, 9 und den beabstandet angeordneten, mit den Schenkeln der Seitenprofile verbundenen schenkelartigen Fortsätze 11a - 11d, die quasi eine Profilbrücke bilden, erhöht signifikant die Scher- und Knickbelastbarkeit des Überrollbügelsystems, die durch die erwähnte gezielte Wandverstärkung 3a - 4b der Schenkelrohre 3, 4 des Überrollbügels 1 noch gesteigert wird.

Die Figur 3 zeigt in einer isometrischen Darstellung die Traverse 5 und macht dabei den Profilcharakter der Taverse deutlich. Wie bereits erwähnt, besitzt das die Traverse 5 bildende Profilteil zwei Öffnungen 6, in denen die Enden der Schenkelrohre befestigt sind.

Das Profilteil besitzt ferner eine Bohrung 29 für die Befestigung des Rastdornes 24 an der Traverse 5, sowie eine Öffnung 30 für die Aufnahme des unteren Endes der Verriegelungsklinke 25 im ausgefahrenen Zustand des Überrollbügels 1.

In Figur 3 ist dabei der Zustand dargestellt, in dem die Halteklinke 21 die an der Traverse angeformte Verriegelungsnase 20 freigegeben hat. Die Figur 4 zeigt demgegenüber den Zustand, in dem beide Halteteile im Wirkeingriff stehen und die Traverse 5 (und damit den Überrollbügel) in der Ruhelage gehalten wird.

Entsprechend dem den Führungsblock 11 bildenden Profilkörper weist auch der die Traverse 5 bildende Profilkörper, wie die Figuren 3 - 7 zeigen, an den Stirnseiten eine Profilbrücke, d.h. jeweils zwei um das Öffnungsmaß der Seitenprofile 8, 9 beabstandete schenkelartige Fortsätze 5a, 5b, 5c und 5d auf, die jeweils flächig an der Innenseite des zugehörigen U-Schenkels der Seitenprofile anliegen, jedoch nicht mit diesem fest verbunden, sondern gleitend geführt sind. Durch diese zusätzliche Führung der mit dem Überrollbügel verbundenen Traverse 5 ist grundsätzlich eine Führung über Standrohre entbehrlich. Die U-förmig angeformten Schenkelfortsätze 5a - 5d sorgen zudem für eine weitere Erhöhung der Biegesteifigkeit des Überrollbügelsystems. Diese Abstützung der Traverse bzw. Schenkel in den Seitenprofilen gewährleistet über den gesamten Hub des Überrollbügels eine Krafteinleitung in das Überrollbügelrohr, mit dem die Traverse fest verbunden ist.

Zur weiteren Verstärkung und Versteifung ist gemäß Figur 6 im Innern der Seitenprofile 8, 9 ein Metallprofil 31 mit zwei gegenseitig beabstandeten Anlagen 31a, 31b, die zu dem zugehörigen Schenkel des Seitenprofils einen vorgegebenen Abstand für die Aufnahme der Schenkelfortsätze 5a - 5d haben, angeordnet. Die Anlagen 31a, 31b wirken der Kraft entgegen, die versucht, die beiden U-Schenkel des Seitenprofiles 8, 9 aufeinander zuzubewegen.

Im Fall des Metallprofiles 31 nach Figur 6 ist eine vorgegebene Toleranz zwischen den Schenkeln des Traversen-Profilkörpers 5 und denjenigen des Seitenprofils 8, 9 notwendig.

Eine praktisch spielfreie Führung der Traverse 5 in den Seitenprofilen 8, 9 läßt sich erreichen, wenn gemäß Figur 7 ein Kunststoffprofil 32 eingesetzt wird, das ebenfalls wie das Metallprofil 31 nach Figur 6 zwei Anschläge 32a und 32b besitzt, das jedoch die Enden der Schenkelfortsätze 5a - 5d umgreift, derart, daß die außen liegenden Bereiche 32c, 32d des Kunststoffprofils den Raum zwischen den Schenkelfortsätzen 5a - 5d der Traverse 5 und den Schenkeln des Seitenprofils 8, 9 ausfüllen, wodurch die Führung spielfrei ist und der Kunststoff das Gleitvermögen erhöht.

Die fahrzeugfeste Befestigung des Kassetten-Gehäuses erfolgt vorzugsweise durch Befestigung des Bodenbleches 10 am Fahrzeugboden. Auch ist eine Befestigung am Sitzgestell möglich, wenn an den Seitenprofilen übliche, nach außen abgewinkelte Befestigungsleisten angebracht bzw. angeformt sind.

Das Kassettengehäuse muß nicht zwingend aus separaten Seitenprofilen 8, 9 zusammengesetzt sein. Es kann auch durch ein U-förmiges Profilteil mit dem Verbindungsschenkel als Deckblech und den U-Schenkeln als Seitenwände, die zusätzlich unter Bildung des Seitenprofiles am freien Ende abgekantet sind, gebildet werden.

## Patentansprüche

1. Überrollschutzsystem, mit
- einem fahrzeugfest anbringbaren kassettenartigen Gehäuse (7), das die Kassettentiefe vorgebende Seitenwände besitzt,
- einem U-förmigen Überrollbügel (1), bestehend aus einem gekrümmten Abschnitt (2) und zwei parallelen Schenkelrohren (3, 4), die jeweils eine geschlossene Mantelfläche besitzen, und deren offene Enden über eine biegesteife Traverse (5) miteinander verbunden sind, und
- einem am oberen Ende des Gehäuses (7) an den Seitenwänden (8, 9) angebrachten Führungsblock (11), der Führungsöffnungen (18, 19) zur äußere Führung der Schenkelrohre (3, 4) besitzt,
**dadurch gekennzeichnet, daß**
- die Seitenwände (8, 9) ein U-Profil bilden,
- an den Stirnseiten des Führungsblockes (11) jeweils zwei um das Öffnungsmaß des Seitenwand-U-Profiles (8, 9) beabstandete, eine Profilbrücke bildende schenkelartige Fortsätze (11a - 11d) angeformt sind, die fest mit den zugehörigen Schenkeln des Seitenwand-U-Profils (8, 9) verbunden sind,
- die Traverse (5) blockartig als Profilteil ausgebildet ist, Bohrungen (6) zur befestigenden Aufnahme der Enden der Schenkelrohre (3, 4) des Überrollbügels aufweist und an ihren Stirnseiten jeweils zwei um das Öffnungsmaß des Seitenwand-U-Profils (8, 9) beabstandete, eine Profilbrücke bildende, angeformte Fortsätze (5a - 5d) besitzt, die in dem Seitenwand-U-Profil (8, 9), geführt von dessen Schenkeln, verschiebbar aufgenommen sind.

2. Überrollschutzsystem nach Anspruch 1, **dadurch gekennzeichnet, daß** die Schenkelrohre (3, 4) in zwei gegenüberliegenden Abschnitten (3a, 3b; 4a, 4b) senkrecht zur Bügelrohr-Ebene eine vergrößerte Wandstärke besitzen.

3. Überrollschutzsystem nach Anspruch 1 oder 2, **dadurch gekennzeichnet, daß** im Bodenteil (10) des Kassettengehäuses (7) einmal eine Halteklinke (21) schwenkbar angelenkt ist, und zum anderen ein sensorgesteuertes Auslösesystem für ein Verschwenken der Halteklinke (21) fest angebracht ist, und daß an der Traverse (5) eine Verriegelungsnase (20) angeformt ist, die in Wirkeingriff mit der Halteklinke (21) bringbar ist, um den Überrollbügel (1) in seiner unteren Ruhelage zu halten.

4. Überrollschutzsystem nach einem der Ansprüche 1 bis 3, **dadurch gekennzeichnet, daß** im Bodenteil (10) des Kassettengehäuses (7) zwei Federführungsbolzen (12, 13) entsprechend der Bügelrohrbreite beabstandet verankert sind, die jeweils eine Antriebs-Druckfeder (14, 15) für das Ausfahren des Überrollbügels (1) in seine obere, schützende Stellung aufnehmen und direkt von den Schenkelrohren (3, 4) des Überrollbügels (1) umfaßt sind.

5. Überrollschutzsystem nach Anspruch 4, **dadurch gekennzeichnet, daß** an den Federführungsbolzen (12, 13) jeweils mindestens ein Satz gespreizter Zentrierarme (16, 17) angebracht ist, die einen gleichmäßigen Abstand des jeweiligen Schenkelrohres (3, 4) zu der zugehörigen Antriebs-Druckfeder (14, 15) sichern.

6. Überrollschutzsystem nach einem der Ansprüche 1 bis 5, **dadurch gekennzeichnet, daß** in den Seitenwand-Profilen (8, 9) im Bereich des Bodens (10) des Kassettengehäuses (7) Distanzstücke (23) angebracht sind.

7. Überrollschutzsystem nach einem der Ansprüche 1 bis 6, **dadurch gekennzeichnet, daß** in den Seitenwand-Profilen (8, 9) zumindest in dem durch die Hubhöhe der Traverse (5) vorgegebenen Bereich jeweils ein Profilteil (31, 32) angebracht ist, das zwei um das Innenmaß der die Profilbrücke bildenden schenkelartigen Fortsätze (5a - 5d) beabstandet angeordnete Anschläge (31a, 31b; 32a, 32b) aufweist.

8. Überrollschutzsystem nach Anspruch 7, **dadurch gekennzeichnet, daß** das Profilteil (31) aus Metall besteht.

9. Überrollschutzsystem nach Anspruch 7, **dadurch gekennzeichnet, daß** das Profilteil (32) aus Kunststoff besteht, und neben den Anschlägen (32a, 32b) an den Stirnseiten jeweils einen, den Raum zwischen dem schenkelartigen Fortsatz (5a, 5b) der Traverse (5) und dem U-Schenkel des Seitenwandprofils (8, 9) ausfüllenden Fortsatz (32c, 32d) besitzt.

## Claims

1. Rollover protection system, comprising
- a cassette-like housing (7) which can be firmly attached to the vehicle and has side walls defining the depth of the cassette,
- a U-shaped roll bar (1) consisting of a curved portion (2) and two parallel limb tubes (3, 4) each of which has a closed outer surface and the open ends of which are connected to each other *via* a flexurally rigid cross-piece (5), and
- a guide block (11) which is attached to the side walls (8, 9) at the upper end of the housing (7) and has guide apertures (18, 19) for externally guiding the limb tubes (3, 4),
**characterised in that**
- the side walls (8, 9) form a U-profile section,
- two arm-like extensions (11a - 11d) which are spaced apart by the size of the opening of the side wall U-profile section (8, 9) and form a profile section bridge are integrally formed on each of the end faces of the guide block (11), which arm-like extensions (11a - 11d) are fixedly connected to the associated arms of the side wall U-profile section (8, 9),
- the cross-piece (5) is constructed in the manner of a block as a profile section part, has apertures (6) for receiving and fastening the ends of the limb tubes (3, 4) of the roll bar and has, at each end face, two arm-like extensions (5a - 5d) which are spaced apart by the size of the opening of the side wall U-profile section (8, 9) and form a profile section bridge and which are displaceably received in the side wall U-profile section (8, 9), guided by the arms thereof.

2. Rollover protection system according to claim 1, **characterised in that** the limb tubes (3, 4) have an increased wall thickness perpendicular to the plane of the roll bar tube in two opposing portions (3a, 3b; 4a, 4b).

3. Rollover protection system according to claim 1 or claim 2, **characterised in that**, in the base portion (10) of the cassette housing (7), on the one hand a retaining catch (21) is pivotally coupled and, on the other hand, a sensor-controlled release system for pivoting the retaining catch (21) is fixedly mounted, and a locking projection (20) is integrally formed on the cross-piece (5), which locking projection (20) can be brought into operative engagement with the retaining catch (21) in order to hold the roll bar (1) in its lower, resting position.

4. Rollover protection system according to any one of claims 1 to 3, **characterised in that** two spring guide pins (12, 13) are anchored in the base portion (10) of the cassette housing (7), which spring guide pins (12, 13) are spaced apart by a distance corresponding the width of the roll bar and each of which receives a driving compression spring (14, 15) for extending the roll bar (1) into its upper, protecting position and is directly surrounded by the limb tubes (3, 4) of the roll bar (1).

5. Rollover protection system according to claim 4, **characterised in that** at least one set of splayed centring arms (16, 17) is mounted on each of the spring guide pins (12, 13), which centring arms (16, 17) ensure even spacing of the respective limb tube (3, 4) from the associated driving compression spring (14, 15).

6. Rollover protection system according to any one of claims 1 to 5, **characterised in that** spacers (23) are mounted in the side wall profile sections (8, 9), in the region of the base (10) of the cassette housing (7).

7. Rollover protection system according to any one of claims 1 to 6, **characterised in that** a profile section part (31, 32) is mounted in each of the side wall profile sections (8, 9), at least in the region defined by the travel of the cross-piece (5), which profile section part (31, 32) has two stops (31a, 31b; 32a, 32b) which are spaced apart by the internal size of the arm-like extensions (5a - 5d) which form the profile section bridge.

8. Rollover protection system according to claim 7, **characterised in that** the profile section part (31) consists of metal.

9. Rollover protection system according to claim 7, **characterised in that** the profile section part (32) consists of plastics material and has at each end face beside the stops (32a, 32b) an extension (32c, 32d) that fills the space between the arm-like extension (5a, 5b) of the cross-piece (5) and the U-limb of the side wall profile section (8, 9).

## Revendications

1. Système de protection en cas de tonneau avec :
- une caisse (7) formée de compartiments, pouvant être fixée à un véhicule, ayant des parois latérales déterminant la hauteur des compartiments,
- un arceau de sécurité en forme de U (1), consistant en un tronçon (2) courbe et en deux tubes de branche (3, 4) parallèles, qui possèdent respectivement une surface enveloppe fermée, et dont les extrémités ouvertes sont reliées mutuellement par une entretoise résistant à la flexion (5), et
- un bloc de guidage (11) monté sur les parois latérales (8, 9) au niveau de l'extrémité supérieure de la caisse (7), comprenant des ouvertures de guidage (18, 19) pour le guidage extérieur des tubes de branche (3, 4),
**caractérisé par le fait que** :
- les parois latérales (8, 9) constituent un profilé en U,
- au niveau des côtés avant du bloc de guidage (11), sont formés respectivement deux prolongements en branche (11a)-11d) formant un pont profilé, écartés de façon circonférentielle selon l'ouverture du profil en U des parois latérales (8, 9), reliés rigidement aux branches associées du profilé en U des parois latérales (8, 9),
- l'entretoise (5) massive, formée d'une pièce de profilé, présente des trous (6) pour la réception fixe des extrémités des tubes de branche (3, 4) de l'arceau de sécurité et au niveau de ses côtés de devant comprend respectivement deux prolongements modelés, formant un pont profilé, écartés de façon circonférentielle selon le pourtour de l'ouverture du profilé en U des parois latérales (8, 9), qui dans le profilé en U des parois latérales (8, 9) guidés par les branches de ces dernières, sont reçus coulissants.

2. Système de protection en cas de tonneau selon la revendication 1, **caractérisé par le fait que** les tubes de branche (3, 4) dans deux tronçons situés en regard (3a, 3b; 4a, 4b), orthogonalement par rapport au plan du tube arceau, présentent une épaisseur de paroi accrue.

3. Système de protection en cas de tonneau selon l'une quelconque des revendications 1 et 2, **caractérisé par le fait que**, dans la partie du corps (10) de la caisse à compartiments (7), d'une part, un verrou de maintien (21) est articulé pivotant, d'autre part, un système de déclenchement piloté par capteur, pour un pivotement du verrou de maintien (21), est monté fixe, et **le fait que**, au niveau de l'entretoise (5), un doigt de verrouillage (20) est ménagé, pouvant être amené en contact du verrou de maintien (21), pour maintenir l'arceau de sécurité (1) dans sa position inférieure de repos.

4. Système de protection en cas de tonneaux selon l'une quelconque des revendications 1 à 3, **caractérisé par le fait que**, dans la partie du corps (10) de la caisse à compartiments (7), deux boulons de guidage de ressorts (12, 13) correspondant à la largeur du tube arceau sont fixés écartés, et reçoivent chacun un ressort de poussée de commande (14, 15) pour le déploiement de l'arceau de sécurité (1) dans sa position supérieure, de protection, et sont entourés directement par les tubes de branche (3, 4) de l'arceau de sécurité (1).

5. Système de protection en cas de tonneaux selon la revendication 4, **caractérisé par le fait que**, sur les boulons de guidage de ressort (12, 13), est monté respectivement au moins un jeu écarté de bras de centrage (16, 17) est monté, assurant un écart identique des tubes de branche (3, 4) par rapport aux ressorts de commande de poussée (14, 15) associés.

6. Système de protection en cas de tonneau selon.l'une quelconque des revendications 1 à 5, **caractérisé par le fait que** sont montés des éléments d'écartement (23) dans les profilés de parois latérales (8, 9), dans la zone du corps (10) de la caisse à compartiments (7).

7. Système de protection en cas de tonneau selon l'une quelconque des revendications 1 à 6, **caractérisé par le fait que**, dans les profilés des parois latérales (8, 9) à l'intérieur de l'au moins une de leurs parties de profilé (31, 32) est respectivement montée dans la zone déterminée par la hauteur de l'entretoise (5), la partie présentant deux butées (31a, 31b ; 31a, 32b) disposées écartées de façon circonférentielle à l'intérieur des prolongements (5a à 5d) en forme de banche constituant un pont profilé.

8. Système de protection en cas de tonneau selon la revendication 7, **caractérisé par le fait que** la partie de profilé (31) est en métal.

9. Système de protection en cas de tonneau selon la revendication 7, **caractérisé par le fait que** la partie profilée (32) est en matière plastique, et près des butées (32a, 32b) sur les côtés avant respectifs possède un prolongement (31c, 32d) remplissant le vide existant entre le prolongement en forme de branche coudée (5a, 5b) de l'entretoise (5) et la branche en U du profilé de parois latérales (8, 9).
